# FASCICULE DE BREVET EUROPEEN

(11) **EP 3 742 906 B1**
(45) Date de publication et mention de la délivrance du brevet: **14.08.2024**
(21) Numéro de dépôt: 19700838.6
(22) Date de dépôt: 23.01.2019
(51) Int. Cl.: A23L 33/00, A23J 3/14, A23J 3/30, A23L 33/18

(54) **HYDROLYSAT PROTEIQUE DE FABACEES COMME SOURCE PROTEIQUE HYPOALLERGENIQUE DANS DES COMPOSITIONS ALIMENTAIRES**
PROTEINHYDROLYSAT AUS FABACEAE ALS HYPOALLERGENE PROTEINQUELLE IN LEBENSMITTELZUSAMMENSETZUNGEN
PROTEIN HYDROLYSATE OF FABACEAE AS A SOURCE OF HYPOALLERGENIC PROTEIN IN FOOD COMPOSITIONS

(30) Priorité: 23.01.2018 FR 1850508
(43) Date de publication de la demande: 02.12.2020
(73) Titulaire: Laboratoires Gilbert, 14200 Herouville Saint Clair (FR)
(72) Inventeur: LEICHTNAM, Marie-Laure, Astrid, 14200 HEROUVILLE SAINT-CLAIR (FR); BROCA, Stéphanie, Monique, 77166 GRISY-SUISNES (FR)
(74) Mandataire: Lavoix
(86) Numéro de dépôt international: PCT/EP2019/051609
(87) Numéro de publication internationale: WO 2019/145351

(56) Documents cités:
- EP-A1- 0 210 448
- EP-A1- 0 575 452
- WO-A1-02/069732
- FR-A1- 3 013 186
- US-A- 3 969 540
- US-A1- 2015 237 885
- US-A1- 2016 000 133

## Description

### Domaine technique

La présente invention concerne des compositions alimentaires à base de protéines.

### Etat de la technique

Les protéines constituent l'une des trois grandes familles de macronutriments présentes dans les aliments. Les protéines sont toutes constituées des mêmes acides aminés dont seuls la proportion et l'ordre d'enchaînement varient. L'homme utilise seulement 20 acides aminés pour répondre à ses besoins structuraux, fonctionnels et énergétiques. Parmi ces 20 acides aminés, 8 sont dits « essentiels », c'est-à-dire que l'organisme ne peut pas les synthétiser ; ils doivent donc être apportés exclusivement par l'alimentation. Il s'agit de l'isoleucine, la leucine, la lysine, la méthionine, la phénylalanine, la thréonine, le tryptophane et la valine. Par ailleurs, il existe 2 acides aminés semi-essentiels : l'arginine et l'histidine qui devront, dans certains cas, être assimilés au travers de l'alimentation. Il reste donc dix acides aminés non-essentiels qui sont synthétisés par l'organisme lui-même. Il s'agit de l'alanine, l'asparagine, l'acide aspartique, la cystéine, la glutamine, l'acide glutamique, la glycine, la proline, la serine et la tyrosine.

Les protéines ont principalement deux origines alimentaires : animale et végétale. Les protéines animales proviennent du lait, de la viande, du poisson, des crustacés et des oeufs. Les protéines végétales sont présentes essentiellement dans les céréales et les légumineuses. Certains végétaux comme les algues, rapportées à leur poids sec, sont également riches en protéines.

La qualité de l'apport protéique alimentaire est principalement liée à la composition en acides aminés essentiels et à la digestibilité. La quantification globale des acides aminés d'une fraction protéique (acides aminés essentiels et semi-essentiels) est comparée à une protéine de référence pour en calculer son indice chimique (IC). Cette protéine de référence a été établie virtuellement sur la base des données techniques, analytiques et épidémiologiques disponibles à ce jour ; sa composition permet de couvrir l'ensemble des besoins en acides aminés essentiels.

Les protéines d'origine animale ont naturellement un IC élevé (IC > 100), généralement plus élevé que les protéines d'origine végétale. Les Apports Nutritionnels de Référence sont estimés à 50 g de protéines/jour pour un adulte. Si ces apports sont couverts par des protéines animales, alors les besoins en acides aminés essentiels sont également couverts. Par contre, certaines protéines végétales peuvent présenter une teneur limitée en un ou plusieurs acides aminés indispensables (IC < 100), par exemple en lysine pour les céréales et en acides aminés soufrés (méthionine, cystéine) pour les légumineuses. Donc, à apport égal en protéines, les protéines végétales ne couvriront pas les besoins en acides aminés essentiels, alors que les protéines animales y répondront. La digestibilité, quant à elle, est en général légèrement plus élevée pour les protéines animales que pour les protéines végétales. En alimentation humaine, les protéines animales répondent donc mieux aux besoins que les protéines végétales. Toutefois, la disponibilité des protéines animales commence à être limitée en raison d'une production saturée et des effets néfastes de leur production sur l'environnement.

Les préparations infantiles sont des produits de remplacement partiel ou total du lait maternel. Les préparations infantiles ont historiquement été développées à partir du lait de vache. Leur composition a évolué au fil du temps, afin d'améliorer leurs propriétés nutritives et digestives. Toutefois, ces dernières décennies, le nombre croissant de réactions allergiques et de sensibilisations aux protéines de lait de vache, même après hydrolyse des protéines, ont conduit à développer des alternatives aux hydrolysats de protéines animales, qualifiées d'hypoallergéniques. Ces préparations alternatives totalement dénuées de protéines animales (vache ou chèvre), contiennent des protéines végétales hydrolysées ou non, comme les protéines de soja ou de riz.

Le soja est une protéagineuse qui est exploitée depuis de nombreuses années. Toutefois, le soja contient des isoflavones, i.e. des hormones végétales qui ont des propriétés pseudo-oestrogéniques susceptibles d'interférer avec le système hormonal de l'homme et donc avec le développement de l'enfant. Certains procédés permettent de réduire le taux d'isoflavone dans le soja, mais sans réussir à l'éliminer en totalité. D'autre part, l'augmentation de l'utilisation de soja dans les régimes alimentaires a engendré un accroissement des allergies au soja.

S'agissant du riz, cette céréale présente l'inconvénient d'avoir un faible taux de lysine, un acide aminé essentiel. D'autre part, le riz contient des taux élevés en arsenic, ce qui nécessite des traitements spécifiques de purification et/ou des sélections de lots, mais sans maitrise réelle de ce contaminant.

Il existe toujours un besoin de solutions alternatives permettant de fournir des compositions alimentaires protéiques, en particulier des préparations infantiles, possédant à la fois un caractère hypoallergénique et de bonnes qualités nutritionnelles, notamment en termes de composition en acides aminés et de digestibilité des protéines. WO 02/069732 A1 décrit un procédé de fabrication de protéines à partir de farine de soja dégraissée.

### Description détaillée

Les Inventeurs ont mis en évidence une nouvelle source protéique possédant des qualités nutritionnelles proches de celles des protéines de lait de vache, tout en étant hypoallergénique.

Cette nouvelle source protéique est d'origine végétale. Il s'agit d'un hydrolysat protéique de fève et/ou de féverole.

L'hydrolysat protéique végétal de Fabacées, en particulier de fève et/ou de féverole, selon l'invention présente de nombreux avantages : il est riche en protéines (au moins 85%, de préférence au moins 90%, plus préférentiellement au moins 95% de protéines en masse de matière sèche), a une concentration en sodium inférieure à 4,5%, de préférence inférieure à 4%, par exemple inférieure à 0,2%, ne comprend pas de gluten, a une teneur en contaminants maitrisable et présente un aminogramme le plus proche possible de la protéine de référence, i.e. de la protéine idéale théorique répondant aux besoins de l'homme. Il ne comprend de préférence pas d'éléments traces susceptibles d'interagir avec le système hormono-hypophysaire.

Par ailleurs, le procédé de production de l'hydrolysat protéique végétal selon l'invention est simple de mise en oeuvre et permet de produire l'hydrolysat à l'échelle industrielle avec un bon rendement, par exemple supérieur à 23%, tout en préservant les qualités initiales de la source protéique végétale, en particulier de la fève et/ou féverole. Le procédé de production de l'hydrolysat protéique végétal permet avantageusement d'obtenir un hydrolysat avec une teneur faible en sodium et une grande pureté.

L'hydrolysat protéique végétal de Fabacées, en particulier de fève et/ou de féverole, selon l'invention est donc particulièrement adapté à la préparation de compositions alimentaires destinées à l'alimentation des nourrissons, adolescents, femmes enceintes ou allaitantes et personnes âgées.

Un premier objet de l'invention est un hydrolysat protéique végétal de fèves et / ou féveroles caractérisé en ce qu'il comprend au moins 85% de protéines, le pourcentage étant exprimé en g pour 100 g de matière sèche de l'hydrolysat protéique, et en ce qu'il comprend du sodium à une concentration inférieure à 4,5%, le pourcentage étant exprimé en g pour 100 g de l'hydrolysat protéique.

L'hydrolysat protéique végétal tel que défini ci-dessus est de préférence obtenu par hydrolyse enzymatique.

Un autre objet de l'invention est une composition alimentaire comprenant un hydrolysat protéique végétal tel que défini ci-dessus.

La composition alimentaire est de préférence sélectionnée dans le groupe consistant en une préparation infantile, barre, encas, préparation en poudre, crème dessert, fromage blanc, boisson frappée à base de lait, boisson frappée aux fruits, yaourt à boire, biscuit, pain, biscotte, pâtes et soupe.

Un autre objet de l'invention est un procédé de préparation d'un hydrolysat protéique végétal de fèves et / ou de féveroles, en particulier tel que défini ci-dessus, comprenant les étapes suivantes :
a) solubilisation des protéines d'une farine de fèves et / ou féveroles en milieu aqueux à un pH inférieur ou égal à 8,5, pour obtenir des protéines solubilisées,
b) optionnellement, purification desdites protéines solubilisées, pour obtenir des protéines solubilisées purifiées, ladite étape de purification comprenant de préférence une étape de précipitation à un pH compris de 4 à 5,
c) hydrolyse enzymatique des protéines solubilisées, pour obtenir un hydrolysat protéique végétal,
d) optionnellement, séchage dudit hydrolysat protéique et/ou congélation.

Un autre objet de l'invention est un procédé de préparation d'une composition alimentaire, caractérisé en ce que ledit procédé comprend une étape de mélange d'au moins un hydrolysat protéique végétal tel que défini ci-dessus ou obtenu selon le procédé tel que défini ci-dessus avec au moins un autre ingrédient alimentaire.

Un autre objet de l'invention concerne l'utilisation d'un hydrolysat protéique végétal tel que défini ci-dessus ou obtenu selon le procédé tel que défini ci-dessus, hydrolysat protéique de fève et/ou féverole, comme substitut partiel ou total des protéines de lait de vache, riz, soja et/ou de tout autre source protéinée, dans une composition alimentaire, en particulier pour diminuer le caractère allergène de ladite composition, diminuer la teneur en contaminant(s) de ladite composition et/ou obtenir une composition sans isoflavone.

Un autre objet de l'invention concerne l'utilisation d'un hydrolysat protéique végétal tel que défini ci-dessus ou obtenu selon le procédé tel que défini ci-dessus, hydrolysat protéique de fève et/ou féverole, comme source protéique hypoallergénique dans une composition alimentaire, en particulier par rapport aux protéines de lait de vache.

### Matière protéique végétale

La matière protéique utilisée pour obtenir l'hydrolysat protéique selon l'invention est donc une matière protéique végétale issue d'une plante.

La matière protéique végétale est de préférence obtenue à partir d'une légumineuse de la famille des *Fabacées*, plus préférentiellement du genre *Vicia,* plus préférentiellement encore de l'espèce *Vicia faba.*

L'espèce *Vicia faba* est une fève ou une féverole.

La matière protéique végétale peut être obtenue à partir d'une variété de fève ou de féverole ou à partir d'un mélange d'au moins deux variétés de fève et/ou féverole.

La matière protéique végétale est de préférence obtenue à partir d'au moins une fève de la variété sélectionnée dans le groupe consistant en la variété Fève de Séville, Aguadulce, Fève des Marais, Muchamiel et Piccola et/ou d'au moins une féverole de la variété sélectionnée dans le groupe consistant en la variété Olan, Diva, Iréna, Castel (anciennement appelée Axel), Espresso, Divine, Gladice, Organdi, Nordica et Diver.

La matière protéique végétale est de préférence obtenue à partir d'une féverole de la variété Olan et/ou d'une féverole de la variété Iréna.

La matière protéique végétale peut être obtenue à partir de la plante entière ou de d'une partie de la plante, par exemple racine, tige, feuille et/ou graine.

Les termes « graine » et « semence » sont ici synonymes.

Dans un mode de réalisation préféré, la partie de la plante utilisée pour obtenir la matière protéique végétale est la graine.

La graine est de préférence préalablement décortiquée.

La matière protéique végétale peut être une farine, un concentrat et/ou un isolat.

Une farine comprend généralement de 23% à 33% de protéines végétales (le pourcentage étant exprimé en g pour 100 g de farine). Une farine peut être obtenue par décorticage et broyage de graines, en particulier de graines de fève et/ou féverole.

Un concentrat de matière protéique végétale comprend généralement de 60 à 75% de protéines végétales (le pourcentage étant exprimé en g pour 100 g de concentrat). Un concentrat de matière protéique végétale peut être obtenu à partir d'une farine telle que définie ci-dessus, par exemple par une étape de turboséparation. La turboséparation permet d'éliminer les grosses particules d'amidon.

Un isolat de matière protéique végétale comprend généralement au moins 85% de protéines végétales, par exemple de 85% à 90% ou au moins 90% de protéines (le pourcentage étant exprimé en g pour 100 g d'isolat). Un isolat de matière protéique végétale peut être obtenu par une étape d'extraction de protéines, soit à partir d'une farine telle que définie ci-dessus, soit à partir d'un concentrat tel que défini ci-dessus. L'étape d'extraction de protéines comprend généralement une étape de solubilisation des protéines à pH basique supérieur ou égal à 9, par exemple en présence d'eau et de soude, et une étape de précipitation des protéines à pH isoélectrique, de préférence à pH 4,5. L'étape de précipitation peut être suivie d'une étape de centrifugation.

Un isolat de matière protéique végétale est constitué de protéines natives, c'est-à-dire des protéines peu ou non transformées par rapport aux protéines contenues dans le grain initial. Les protéines natives conservent leurs longueurs de chaines initiales et présentent donc majoritairement un haut poids moléculaire.

### Hydrolysat protéique végétal

L'hydrolysat protéique végétal est obtenu à partir d'une matière protéique végétale telle que définie ci-dessus.

L'hydrolysat protéique végétal est donc un hydrolysat protéique de légumineuse, de la famille des *Fabacées*, plus préférentiellement du genre *Vicia,* plus préférentiellement encore de l'espèce *Vicia faba.*

L'hydrolysat protéique végétal est un hydrolysat protéique de fève et/ou de féverole.

L'hydrolysat protéique végétal est de préférence obtenu à partir d'une farine de fève et/ou féverole.

L'hydrolysat protéique végétal peut être sous forme liquide, en particulier sous forme liquide congelée, ou bien sous forme sèche.

La forme liquide congelée et la forme sèche permettent en effet une bonne conservation de l'hydrolysat protéique végétal.

Dans un mode de réalisation préféré, l'hydrolysat protéique végétal est sous forme sèche.

L'expression « sous forme sèche » signifie que l'hydrolysat protéique végétal comprend au moins 95%, de préférence au moins 96%, de préférence au moins 97%, plus préférentiellement au moins 98%, plus préférentiellement encore au moins 99% de matière sèche, le pourcentage étant exprimé en g pour 100 g de l'hydrolysat.

L'hydrolysat protéique végétal sous forme sèche est, par exemple, lyophilisé ou atomisé.

Par « hydrolysat protéique végétal atomisé », on désigne un hydrolysat protéique végétal séché par atomisation.

L'hydrolysat protéique végétal est, de préférence, un hydrolysat tel que défini ci-dessus comprenant au moins 85% de protéines, le pourcentage étant exprimé en g pour 100g de matière sèche de l'hydrolysat protéique.

La teneur en protéines peut être mesurée par toute méthode bien connue de l'homme du métier.

La teneur en protéines est par exemple obtenue en multipliant par 6,25 la masse d'azote de la composition, cette dernière étant obtenue par la méthode de Kjeldhal.

L'hydrolysat protéique végétal est de préférence un hydrolysat tel que défini ci-dessus, caractérisé en ce qu'il est pauvre en sodium. L'hydrolysat protéique végétal comprend ainsi de préférence du sodium à une concentration inférieure à 4,5% (le pourcentage étant exprimé en g pour 100g de l'hydrolysat protéique).

L'hydrolysat protéique végétal tel que défini ci-dessus est, de préférence, caractérisé par un taux de cendre supérieur ou égal à 3%, par exemple supérieur ou égal à 3,5% ou à 4%, le pourcentage étant exprimé en g pour 100g de l'hydrolysat protéique.

Dans un mode de réalisation particulier, l'hydrolysat protéique tel que défini ci-dessus est par exemple caractérisé par un taux de cendre supérieur ou égal à 6%, de préférence supérieur ou égal à 7%, le pourcentage étant exprimé en g pour 100g de l'hydrolysat protéique.

Par le terme « cendres », on désigne les résidus solides demeurant après la combustion de l'hydrolysat protéique végétal.

Un hydrolysat protéique préféré est un hydrolysat protéique tel que défini ci-dessus comprenant des peptides de taille moyenne inférieure à 700 Da, de préférence inférieure à 650 Da, plus préférentiellement inférieure à 620 Da, plus préférentiellement encore inférieure à 600 Da.

Dans un mode de réalisation particulier, l'hydrolysat protéique comprend des peptides de taille moyenne inférieure à 590 Da, par exemple inférieure à 585 Da ou inférieur à 560 Da.

L'hydrolysat protéique végétal est par exemple un hydrolysat tel que défini ci-dessus comprenant :
- du sodium à une concentration inférieure à 4,5%, plus préférentiellement inférieure à 4%, le pourcentage étant exprimé en g pour 100g de l'hydrolysat protéique,
- au moins 85% de protéines, le pourcentage étant exprimé en g pour 100g de matière sèche de l'hydrolysat protéique,
- un taux de cendre supérieur ou égal à 3%, le pourcentage étant exprimé en g pour 100g de l'hydrolysat protéique et/ou
- des peptides de taille moyenne inférieure à 600 Da.

Dans un mode de réalisation avantageux, l'hydrolysat protéique végétal est un hydrolysat tel que défini ci-dessus comprenant :
- du sodium à une concentration inférieure à 4,5%, plus préférentiellement inférieure à 4%, le pourcentage étant exprimé en g pour 100g de l'hydrolysat protéique,
- au moins 85% de protéines, le pourcentage étant exprimé en g pour 100g de matière sèche de l'hydrolysat protéique,
- un taux de cendre supérieur ou égal à 7%, le pourcentage étant exprimé en g pour 100g de l'hydrolysat protéique, et/ou
- des peptides de taille moyenne inférieure à 600 Da.

Un tel hydrolysat est par exemple obtenu en utilisant un procédé de préparation tel que défini ci-dessous, dans lequel le pH est ajusté avec une solution d'hydroxyde de sodium lors de l'étape de solubilisation des protéines.

Dans un autre mode de réalisation avantageux, l'hydrolysat protéique végétal est un hydrolysat tel que défini ci-dessus comprenant :
- du sodium à une concentration inférieure à 1%, plus préférentiellement inférieure à 0,5%, plus préférentiellement encore inférieure à 0,2%, le pourcentage étant exprimé en g pour 100g de l'hydrolysat protéique,
- du calcium à une concentration supérieure ou égale à 0,5%, plus préférentiellement supérieure ou égale à 1%, plus préférentiellement encore supérieure ou égale à 1,4%, le pourcentage étant exprimé en g pour 100g de l'hydrolysat protéique,
- au moins 90% de protéines, de préférence au moins 94% de protéines, le pourcentage étant exprimé en g pour 100g de matière sèche de l'hydrolysat protéique,
- un taux de cendres supérieur ou égal à 3% et/ou inférieur à 6%, le pourcentage étant exprimé en g pour 100g de l'hydrolysat protéique, et/ou
- des peptides de taille moyenne inférieure à 570 Da, de préférence inférieure à 560 Da.

Un tel hydrolysat est par exemple obtenu en utilisant un procédé de préparation tel que défini ci-dessous, dans lequel le pH est ajusté avec de la chaux lors de l'étape de solubilisation des protéines.

L'hydrolysat protéique végétal selon l'invention est hypoallergénique.

Par le terme « hypoallergénique », on désigne ici un produit dont l'ingestion provoque peu ou pas de réaction allergique. Le caractère hypoallergénique d'un produit peut être évalué comme illustré dans l'exemple 2.

L'hydrolysat protéique végétal selon l'invention ne comprend pas de gluten et, de préférence, ne comprend pas d'isoflavone.

L'hydrolysat protéique végétal selon l'invention comprend moins de 0,1 ppm, de préférence moins de 0,08 ppm, plus préférentiellement moins de 0,05 ppm d'arsenic.

L'hydrolysat protéique végétal selon l'invention comprend majoritairement des protéines de poids moléculaire plus faible que les protéines natives (i.e. non hydrolysées), permettant ainsi une meilleure absorption intestinale de ces protéines.

L'hydrolysat protéique végétal comprend de préférence au moins 85%, de préférence au moins 88%, plus préférentiellement au moins 90% de protéines ayant un poids moléculaire inférieur à 3 kDa, le pourcentage étant exprimé en g pour 100 g de protéines.

L'hydrolysat protéique végétal comprend de préférence au moins 55%, de préférence au moins 60%, plus préférentiellement au moins 62%, plus préférentiellement au moins 64% de protéines ayant un poids moléculaire inférieur à 1 kDa, le pourcentage étant exprimé en g pour 100 g de protéines. Dans un mode de réalisation avantageux, l'hydrolysat protéique comprend au moins 64% ou au moins 68% de protéines ayant un poids moléculaire inférieur à 1 kDa, le pourcentage étant exprimé en g pour 100 g de protéines

L'hydrolysat protéique végétal comprend de préférence au moins 40%, de préférence au moins 45%, plus préférentiellement au moins 50%, de protéines ayant un poids moléculaire inférieur à 0,8 kDa, le pourcentage étant exprimé en g pour 100 g de protéines. Dans un mode de réalisation avantageux, l'hydrolysat protéique comprend au moins 50%, au moins 52% ou au moins 55% de protéines ayant un poids moléculaire inférieur à 0,8 kDa, le pourcentage étant exprimé en g pour 100 g de protéines.

L'hydrolysat protéique végétal comprend de préférence au moins 4%, de préférence au moins 4,5%, plus préférentiellement au moins 4,8%, par exemple au moins 5%, de protéines ayant un poids moléculaire inférieur à 0,204 kDa.

L'hydrolysat protéique végétal comprend, de préférence :
- au plus 0,10 %, de préférence au plus 0,06%, d'ornithine,
- de 2,8% à 4,1%, de préférence de 3,1% à 3,5% de thréonine,
- de 8,8% à 12,3%, de préférence de 9,4% à 11,8% d'acide aspartique,
- de 3,8% à 5,7%, de préférence de 4,1% à 5,4% de sérine,
- de 5,4% à 8,5%, de préférence de 5,8% à 7,9% de lysine,
- de 3,8% à 5,2%, de préférence de 4,1% à 4,7% de valine,
- de 3,4% à 4,7%, de préférence de 3,6% à 4,4% de proline,
- de 3,3% à 4,5%, de préférence de 3,5% à 4,1% d'alanine,
- de 3,6% à 4,9%, de préférence de 3,7% à 4,5% de phénylalanine,
- de 3,2% à 4,6%, de préférence de 3,4% à 4,2% d'isoleucine,
- de 3,3% à 4,5%, de préférence de 3,5% à 4,3% de glycine,
- de 2,4% à 3,9%, de préférence de 2,6% à 3,4% de tyrosine,
- de 7,8% à 11,0%, de préférence de 8,3% à 10,0% d'arginine,
- de 5,9% à 8,3%, de préférence de 6,4% à 7,6% de leucine,
- de 2,1% à 3,4%, de préférence de 2,3% à 3,2% d'histidine,
- de 14,4% à 21,3%, de préférence de 15,5% à 20,0 % d'acide glutamique,
- de 0,6% à 1,1%, de préférence de 0,69% à 0,82% de tryptophane,
- de 0,4% à 0,9%, de préférence de 0,63% à 0,73% de méthionine, et/ou
- de 0,4% à 1,7%, de préférence de 0,52% à 0,82% de cystéine et cystine, les pourcentages étant exprimés en g pour 100 g de protéines.

L'hydrolysat protéique selon l'invention ne comprend pas de glucides (en particulier d'amidon ou ses dérivés), lipides ou d'acides aminés autres que ceux présents initialement dans la Fabacée, en particulier dans la fève et/ou féverole, ou éventuellement issus de la ou des enzymes utilisées pendant l'hydrolyse.

L'hydrolysat protéique est obtenu par un procédé comprenant une étape de solubilisation des protéines à un pH inférieur ou égal à 8,5, plus préférentiellement inférieur ou égal à 8, par exemple 7,5. Cette originalité du procédé selon l'invention conduit à un hydrolysat protéique avec une teneur réduite en sodium. Le sodium provient en effet principalement de l'hydroxyde de sodium utilisé pour obtenir et/ou maintenir le pH souhaité. La teneur en sodium peut être davantage réduite en utilisant de la chaux sous forme de lait de chaux pour maintenir le pH désiré.

L'hydrolysat protéique est obtenu par hydrolyse, de préférence par hydrolyse enzymatique, d'une matière protéique végétale telle que définie ci-dessus.

L'hydrolysat protéique tel que défini ci-dessus est de préférence obtenu par un procédé tel que défini ci-dessous dans la section « Procédé de préparation d'un hydrolysat protéique végétal ».

### Composition alimentaire

L'hydrolysat protéique végétal est de préférence utilisé dans une composition alimentaire, lui conférant ainsi un caractère hypoallergénique par rapport à une composition alimentaire qui serait à base de protéines de lait de vache natives.

La présente invention a ainsi pour objet une composition alimentaire comprenant ou consistant en au moins un hydrolysat protéique végétal tel que défini ci-dessus dans la section « hydrolysat protéique végétal ».

La composition alimentaire telle que définie ci-dessus peut comprendre au moins 1% d'hydrolysat protéique végétal, de préférence au moins 5% d'hydrolysat protéique végétal, plus préférentiellement au moins 10% d'hydrolysat protéique végétal, par exemple de 10% à 20%, de 20% à 30%, de 30% à 40%, de 40% à 50%, de 50% à 60%, de 60% à 70%, de 70% à 80%, de 80% à 90% d'hydrolysat protéique végétal, le pourcentage étant exprimé en masse sur la masse totale de composition.

La composition alimentaire telle que définie ci-dessus comprend, de préférence, de 10% à 20% d'hydrolysat protéique végétal, par exemple de 15% à 20% d'hydrolysat protéique végétal, le pourcentage étant exprimé en masse sur la masse totale de composition.

Une composition alimentaire préférée est une composition telle que définie ci-dessus, caractérisée en ce qu'au moins 10%, de préférence au moins 20%, au moins 30%, au moins 40%, au moins 50%, au moins 60%, au moins 70%, au moins 80%, au moins 90%, au moins 95% des protéines de ladite composition sont apportées par l'hydrolysat protéique, le pourcentage étant exprimé en masse sur la masse totale de protéines de la composition.

La composition alimentaire peut ainsi comprendre au moins une autre source protéique que l'hydrolysat protéique végétal de fève et/ou féverole, telle qu'une source protéique animale et/ou une autre source protéique végétale, de préférence sous la forme d'un hydrolysat protéique.

Dans un autre mode de réalisation, l'hydrolysat protéique de fève et/ou féverole est la seule source protéique de la composition alimentaire, en particulier lorsque la composition alimentaire est une préparation infantile.

La composition alimentaire peut être tout type de composition permettant d'apporter une source protéique.

La composition alimentaire peut être une préparation infantile, un yaourt, une soupe, une boisson, un complément alimentaire, une préparation en poudre (telle que préparation en poudre à réhydrater, par exemple avec de l'eau et/ou du lait, ou non), barre (par exemple barre de céréales), encas (également appelé « snacking »), crème dessert, fromage blanc, boisson frappée à base de lait (appelée également « milk-shake »), boisson frappée aux fruits (appelée également « smoothie »), boisson de type yaourt à boire, biscuit (par exemple biscuit sec ou moelleux), pain (par exemple pain frais ou pain grillé), biscotte, pâtes, ou leurs combinaisons.

La composition alimentaire peut se présenter sous forme de poudre, sous forme liquide ou semi-liquide.

La composition peut avantageusement comprendre au moins un autre ingrédient alimentaire, i.e. autre que l'hydrolysat protéique végétal.

La présente invention a particulièrement pour objet une composition alimentaire telle que définie ci-dessus, caractérisée en ce que ladite composition alimentaire est une préparation infantile et en ce qu'elle comprend au moins un autre ingrédient alimentaire, par exemple au moins deux, au moins quatre, au moins six, au moins huit, au moins dix ou au moins douze ingrédients alimentaires, ledit autre ingrédient alimentaire étant de préférence sélectionné dans le groupe consistant en une huile, un minéral, un nucléotide, un oligo-élément, un sucre, un polysaccharide, un émulsifiant, une vitamine, de la choline, de l'inositol, un acide aminé, un antioxydant, un ferment lactique, un probiotique autre qu'un ferment lactique, une fibre soluble et leurs combinaisons.

Le sucre est par exemple sélectionné dans le groupe consistant en glucose, autre monosaccharide, lactose, autre disaccharide et leurs combinaisons.

Le polysaccharide est par exemple sélectionné dans le groupe consistant en un amidon (par exemple un amidon prégélatinisé ou un amidon précuit), un hydrolysat d'amidon (tel qu'une maltodextrine), un autre polymère de glucose (par exemple un sirop de glucose) et leurs combinaisons.

La fibre soluble est par exemple sélectionnée dans le groupe consistant en des galacto-oligosaccharides, des fructo-oligosaccharides, de l'inuline et leurs combinaisons.

L'huile est par exemple sélectionnée dans le groupe consistant en de l'huile de palme, huile de palmiste, huile de colza, huile de tournesol, huile de tournesol oléique, huile de soja, huile de coprah, huile de micro-algues, huile de poisson riche en acides gras polyinsaturés et leurs combinaisons.

Le minéral est par exemple sélectionné dans le groupe consistant en du carbonate de calcium, phosphate tricalcique, chlorure de magnésium, phosphate disodique, chlorure de potassium, phosphate dipotassique, diphosphate ferrique, gluconate de zinc, gluconate de cuivre, sélénite de sodium, gluconate de manganèse, iodure de potassium et leurs combinaisons.

L'émulsifiant est par exemple de la lécithine de soja, la lécithine de tournesol, un ester citrique de mono- et di-glycérides et d'acide gras et leurs combinaisons.

La vitamine est par exemple sélectionnée dans le groupe consistant en de l'acétate de rétinol, cholécalciférol, mononitrate de thiamine, riboflavine, nicotinamide, chlorhydrate de pyridoxine, acide folique, D-pantothénate de calcium, cyanocobalamine, phytoménadione, D-biotine, acétate de DL-alpha-tocophérol, L-ascorbate de sodium et leurs combinaisons.

L'acide aminé est par exemple sélectionné dans le groupe consistant en la taurine, L-tryptophane, L-cystine, L-méthionine, L-thréonine et la L-carnitine.

L'acide aminé peut être obtenu par synthèse chimique ou extrait de végétaux.

L'antioxydant est par exemple un extrait riche en tocophérols et/ou du palmitate de L-ascorbyle.

Dans un mode de réalisation, la composition alimentaire telle que définie ci-dessus comprend au moins un autre ingrédient alimentaire sélectionné dans le groupe consistant en un amidon prégélatinisé, un amidon précuit, un hydrolysat d'amidon, tel qu'une maltodextrine, un sirop de glucose et leur combinaisons.

Dans un autre mode de réalisation, la composition alimentaire telle que définie ci-dessus ne comprend pas un amidon prégélatinisé, un amidon précuit, un hydrolysat d'amidon, tel qu'une maltodextrine et/ou un sirop de glucose.

La composition alimentaire telle que définie ci-dessus comprend par exemple au moins un autre ingrédient alimentaire, par exemple au moins deux, au moins quatre, au moins six, au moins huit, au moins dix ou au moins douze ingrédients alimentaires, ledit autre ingrédient alimentaire étant sélectionné dans le groupe consistant en amidon, maltodextrine, lactose, autre monosaccharide, autre disaccharide, polymère de glucose (par exemple sirop de glucose), oligosaccharide (par exemple, galacto-oligosaccharide et/ou fructo-oligosaccharide), ferments lactiques, probiotique autre qu'un ferment lactique, nucléotide, choline, inositol, taurine, acide aminé, huile de micro-algues, huile de poisson riche en acides gras polyinsaturés, émulsifiant (par exemple, lécithine de soja et/ou lécithine de tournesol), antioxydant (par exemple, extrait riche en tocophérols et/ou palmitate de L-ascorbyle), et leurs combinaisons.

Dans un mode de réalisation particulier, la composition alimentaire telle que définie ci-dessus ne comprend pas de caséine ou, plus généralement, ne comprend pas de protéines de lait.

Dans un mode de réalisation particulier, la composition alimentaire telle que définie ci-dessus ne comprend pas de lécithine de soja et/ou ne comprend pas de protéine de soja et/ou ne comprend pas un hydrolysat protéique de soja.

Dans un mode de réalisation particulier, la composition alimentaire telle que définie ci-dessus ne comprend pas de cacao.

Dans un mode de réalisation préféré, la composition alimentaire telle que définie ci-dessus est sous forme pulvérulente.

La composition alimentaire selon l'invention comprenant ou consistant en un hydrolysat protéique végétal de Fabacées, en particulier de fève et/ou féverole, convient à toute personne, qu'elle soit en bonne santé, malade ou présentant des besoins nutritionnels adaptés.

La composition alimentaire selon l'invention comprenant ou consistant en un hydrolysat protéique végétal de fève et/ou féverole, convient tout particulièrement à l'alimentation :
- des nourrissons (i.e. enfants de moins de un an) et des enfants en bas âge (i.e. enfants d'un an à trois ans), en particulier des nourrissons et enfants en bas âge présentant des troubles du métabolisme, des risques d'allergies et/ou des allergies avérées, ou des nourrissons et enfants en bas âge sains pour lesquels les parents ont choisi une alimentation végétale,
- des personnes âgées (en particulier de plus de 60 ans) qui ont des capacités digestives des protéines diminuées et une baisse de la synthèse des protéines,
- des femmes enceintes et/ou allaitantes dont les besoins en protéines sont significativement augmentés, l'hydrolysat protéique selon l'invention permettant de faciliter l'absorption et l'assimilation des protéines nécessaires à la croissance intra-utérine et de bien soutenir l'apport protéique nécessaire à la lactation, et/ou,
- des adolescents (en particulier des enfants de 12 à 18 ans) dont les besoins en protéines sont accrus d'une part par une croissance staturo-pondérale importante, d'autre part par l'évolution du système hormonal et pour lesquels une source de protéines facilement assimilables permet de garantir un apport en acides aminés essentiels parfois difficile à atteindre dans cette période où le régime alimentaire est peu équilibré.

### Procédé de préparation d'un hvdrolvsat protéique végétal

La présente invention a également pour objet un procédé de préparation d'un hydrolysat protéique végétal tel que défini ci-dessus.

Pour être absorbée et assimilée, une protéine végétale doit être réduite en peptides de petites tailles. *In vivo*, l'absorption des protéines nécessite deux hydrolyses successives :
- une hydrolyse par des endopeptidases (par exemple pepsine, trypsine et/ou chymotrypsine) qui réduisent les chaines en petits polypeptides, et
- une hydrolyse par des exopeptidases (en particulier les enzymes intestinales de la bordure en brosse) qui poursuivent l'hydrolyse en produisant des petits peptides et des acides aminés qui sont absorbés par l'entérocyte.

Certaines catégories de population, telles que les personnes âgées et les nourrissons ont un système enzymatique déficient ou immature ne permettant pas cette bio-assimilation. Il est alors indispensable de leur apporter des protéines directement sous formes de peptides. Ces peptides peuvent être obtenus par hydrolyse.

La présente invention a particulièrement pour objet un procédé de préparation d'un hydrolysat protéique végétal de fève et/ou féverole, comprenant les étapes suivantes :
a) optionnellement, broyage de graines de Fabacées, en particulier de fève et/ou féverole, pour obtenir une farine de Fabacées,
b) solubilisation des protéines d'une farine de Fabacées, par exemple telle qu'obtenue à l'issue de l'étape a), pour obtenir des protéines solubilisées,
c) optionnellement, purification des protéines solubilisées, de préférence par précipitation, pour obtenir des protéines solubilisées purifiées,
d) hydrolyse enzymatique des protéines solubilisées, éventuellement purifiées, pour obtenir un hydrolysat protéique végétal, et
e) optionnellement, séchage, par exemple par atomisation ou lyophilisation, et/ou congélation dudit hydrolysat protéique végétal.

### Etape de broyage

Le procédé tel que défini ci-dessus comprend une première étape optionnelle a) de broyage de graines de Fabacées, de préférence des graines de fève et/ou féverole, pour obtenir une farine.

Les graines utilisées à l'étape a) sont, de préférence, des graines décortiquées, afin d'éliminer le plus possible l'enveloppe de la graine. Le décorticage permet notamment de diminuer la teneur en impuretés, telles que les tanins et polyphénols, et la cellulose, et ainsi d'améliorer le rendement de l'étape de solubilisation des protéines

L'étape a) est donc, de préférence, précédée d'une étape de décorticage des graines.

Le broyage des graines est également appelé mouture.

La farine obtenue à l'issue de l'étape de broyage présente, de préférence, moins de 1% de particules de taille supérieure à 250 µm, plus préférentiellement moins de 1% de particules de taille supérieure à 212 µm, plus préférentiellement moins de 1% de particules de taille supérieure à 180 µm, le pourcentage étant exprimé en gramme pour 100 g de farine.

### Etape de solubilisation

Le procédé tel que défini ci-dessus comprend une étape de solubilisation des protéines d'une farine de Fabacées, par exemple telle qu'obtenue par l'étape de broyage définie ci-dessus, pour obtenir des protéines solubilisées.

La solubilisation est effectuée en milieu aqueux, de préférence à un pH inférieur ou égal à 8,5, plus préférentiellement à un pH inférieur ou égal à 8, plus préférentiellement à un pH inférieur ou égal à 7,5.

Par exemple, le pH de l'étape de solubilisation est compris de 7 à 8,5, de préférence comprise de 7,3 à 8, par exemple à 7,5.

Pour obtenir un milieu aqueux, la farine est donc mélangée à de l'eau, de préférence à un ratio massique farine : eau inférieur ou égal à 1 : 4, de préférence inférieur à 1 : 6, plus préférentiellement inférieur à 1 : 8. Le ratio massique farine : eau est par exemple compris de 1 : 8 à 1 : 10, par exemple 1 : 9.

Le mélange de farine et d'eau obtenu comprend donc de préférence au plus 25% de farine, de préférence au plus 15%, par exemple au plus 12% de farine, le pourcentage étant exprimé en g pour 100 g du mélange.

L'eau est, de préférence, une eau osmosée.

L'étape de solubilisation est, de préférence, réalisée à une température comprise de 23°C à 27°C, par exemple à 25°C.

L'étape de solubilisation est, de préférence, effectuée au minimum pendant 20 minutes et/ou au maximum pendant 40 minutes, par exemple pendant 30 minutes.

L'ajustement du pH peut être obtenu en ajoutant un agent alcalinisant, de préférence de l'hydroxyde de sodium et/ou de la chaux.

La chaux est de préférence de la chaux vive, par exemple sous la forme de lait de chaux. Le lait de chaux est obtenu en solubilisant la chaux vive dans de l'eau.

Dans un mode de réalisation préféré, le pH est maintenu à un pH inférieur ou égal à 8,5, de préférence inférieur ou égal à 8, ou préférentiellement égal à 7,5 pendant toute la durée de la solubilisation.

Dans un mode de réalisation avantageux, l'étape de solubilisation comprend ou consiste en les étapes suivantes :
- mélange de la farine à de l'eau, de préférence dans les proportions telles que définies ci-dessus, pour obtenir un mélange,
- ajustement du pH dudit mélange, à un pH tel que défini ci-dessus,
- mise en incubation, de préférence à une température telle que définie ci-dessus et/ou pendant une durée telle que définie ci-dessus et/ou à un pH tel que défini ci-dessus, et
- séparation de la phase solide et liquide, par exemple par décantation ou décantation centrifuge, et récupération de la phase liquide, pour obtenir des protéines solubilisées.

Les protéines solubilisées obtenues à l'issue de l'étape de solubilisation se présentent sous la forme d'une crème protéique.

### Etape de purification

Le procédé tel que défini ci-dessus comprend, optionnellement, une étape de purification des protéines solubilisées.

La purification est, de préférence, une précipitation, pour obtenir des protéines solubilisées purifiées.

La précipitation est, de préférence, obtenue en plaçant les protéines solubilisées à un pH compris de 4 à 5, plus préférentiellement à 4,5. Les phases solides et liquides sont ensuite séparées, de préférence par centrifugation (par exemple au moyen d'une centrifugeuse à assiettes ou d'un sédicanteur), et la phase liquide est éliminée.

Les protéines précipitées présentes dans la phase solide sont ensuite de préférence lavées (par exemple par mise en suspension dans de l'eau osmosée maintenue à pH 4,5, puis séparation centrifuge et élimination de la phase liquide), afin d'améliorer la pureté en protéines.

### Etape d'hydrolyse

Le procédé tel que défini ci-dessus comprend une étape d'hydrolyse enzymatique des protéines solubilisées, lesdites protéines solubilisées pouvant être purifiées ou non.

Dans un mode de réalisation de l'invention, l'étape d'hydrolyse est effectuée sur un isolat resolubilisé. Dans ce cas, les protéines solubilisées obtenues à l'étape b) et éventuellement purifiées telles qu'obtenues à l'étape c) sont préalablement séchées, par exemple par atomisation ou lyophilisation, pour obtenir un isolat.

Dans un mode de réalisation préféré, l'étape d'hydrolyse n'est pas effectuée à partir d'un isolat resolubilisé, mais directement à partir des protéines solubilisées obtenues à l'étape b) ou éventuellement purifiées telles qu'obtenues à l'étape c).

L'étape d'hydrolyse peut être obtenue avec une seule enzyme ou un mélange de deux ou d'au moins deux enzymes.

La ou les enzymes utilisées lors de l'étape d'hydrolyse sont des protéases.

La protéase est de préférence une neutrase ou une alcalase.

L'étape d'hydrolyse est par exemple effectuée au moyen d'au moins une neutrase et/ou d'au moins une alcalase.

L'étape d'hydrolyse est de préférence effectuée au moyen d'au moins une neutrase et/ou d'au moins une alcalase, à l'exclusion de toute autre enzyme.

La ou les enzymes utilisées ne comprennent, de préférence, pas de cellulase, hémicellulase, glucosidase, amylase et/ou xylanase. Plus généralement, la ou les enzymes utilisées ne comprennent pas d'enzyme dégradant les glucides. Dans un mode de réalisation préféré, l'étape d'hydrolyse est effectuée en utilisant une neutrase et une alcalase.

Lorsque plusieurs enzymes sont utilisées pendant l'étape d'hydrolyse, elles sont de préférence utilisées en même temps, par exemple sous la forme d'un mélange.

La température, pH et/ou durée de l'étape d'hydrolyse dépendent notamment de la ou des enzymes utilisées.

Dans une mode de réalisation avantageux, l'étape d'hydrolyse enzymatique est effectuée à température comprise de 45°C à 55°C, de préférence à 50°C.

L'étape d'hydrolyse est, de préférence, effectuée à un pH compris de 6,5 à 7,5, plus préférentiellement à pH 7.

La durée de l'étape d'hydrolyse enzymatique est de préférence comprise de 1h à 3h, par exemple 2 h.

L'étape d'hydrolyse enzymatique telle que définie ci-dessus peut comprendre ou consister en :
- la mise en présence des protéines solubilisées, éventuellement purifiées, avec une ou plusieurs enzymes, de préférence telles que définie ci-dessus, en particulier à une température et/ou pH et/ou pendant une durée tels que définis ci-dessus,
- une étape de désactivation de la ou des enzymes, par exemple par traitement thermique, tel que pendant 30 minutes à 90°C, et/ou une étape de séparation de la phase solide et liquide (de préférence par centrifugation, par exemple dans un sédicanteur) et récupération de la phase liquide, permettant notamment d'éliminer les protéines non hydrolysées insolubles, pour obtenir un hydrolysat protéique.

### Etape de concentration, séchage et/ou congélation

Le procédé tel que défini ci-dessus peut comprendre une étape de concentration, séchage et/ou de congélation dudit hydrolysat protéique.

La concentration est par exemple effectuée par évaporation sous vide.

Le séchage peut être effectué par toute méthode bien connue par l'homme du métier, telle que par atomisation ou lyophilisation.

De préférence, le procédé de préparation d'un hydrolysat protéique végétal de Fabacées tel que défini ci-dessus ne comprend pas une étape d'ajout d'un ou plusieurs un acide aminé ou d'un ou plusieurs lipides.

### Procédé de préparation d'une composition alimentaire

La présente invention a également pour objet un procédé de préparation d'une composition alimentaire comprenant une étape de mélange d'un hydrolysat protéique végétal tel que défini ci-dessus avec au moins un autre ingrédient alimentaire.

L'ingrédient alimentaire peut notamment être tel que défini ci-dessus.

La composition alimentaire est notamment telle que définie ci-dessus.

### Utilisation d'un hydrolysat protéique végétal dans des compositions alimentaires

La présente invention a également pour objet l'utilisation d'un hydrolysat protéique tel que défini ci-dessus, en particulier d'un hydrolysat protéique de fève et/ou féverole, comme substitut partiel ou total des protéines de lait de vache, riz et/ou soja et/ou de tout autre source protéinée, dans une composition alimentaire, en particulier pour diminuer le caractère allergène de ladite composition, diminuer la teneur en contaminant(s) (notamment en arsenic) de la dite composition et/ou obtenir une composition alimentaire sans isoflavone, tout en maintenant des propriétés nutritives au moins équivalentes (par exemple en termes de composition et/ou de digestibilité).

La présente invention a également pour objet l'utilisation d'un hydrolysat protéique végétal tel que défini ci-dessus, en particulier d'un hydrolysat protéique de fève et/ou féverole, comme source protéique hypoallergénique dans une composition alimentaire, en particulier par rapport aux protéines de lait de vache.

Dans un mode de réalisation préféré, l'hydrolysat protéique est obtenu à partir d'une farine de fève et/ou fèverole.

D'autres caractéristiques et avantages de l'invention ressortiront mieux des exemples qui suivent, donnés à titre illustratif.

### Figures

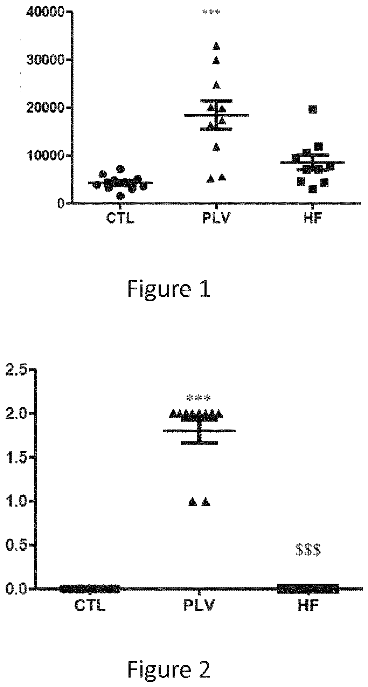

Figure 1 : Concentration sérique en mMCP1 (en pg/ml) (CTL : contrôles ; PLV : animaux sensibilisés puis exposés aux protéines de lait de vache ; HF : animaux sensibilisés aux protéines de lait de vache, puis exposés à l'hydrolysat peptidique de fèverole). Les données représentées sont les valeurs individuelles, les moyennes et les erreurs-standard à la moyenne (SEM). n= 10 par lot. Différences statistiquement significatives par rapport au lot CTL : ***P<0.001
Figure 2 : Scores anaphylactiques obtenus lors de la provocation allergénique. (CTL : contrôles ; PLV : animaux sensibilisés, puis exposés aux protéines de lait de vache ; HF : animaux sensibilisés aux protéines de lait de vache, puis exposés à l'hydrolysat peptidique de fèverole). Les données représentées sont les valeurs individuelles, les moyennes et les erreurs-standard à la moyenne (SEM). n= 10 par lot. Différences statistiquement significatives par rapport au lot CTL : ***P<0.001 ; Différences statistiquement significatives par rapport au lot PLV : $$$ P<0.001.

### EXEMPLES

### EXEMPLE 1 : Production d'un hydrolysat protéique végétal à base de féverole

### Exemple 1A :

### Matériel et méthodes

### (i) Matière première

Une farine obtenue à partir de graines de féveroles de la variété Olan soigneusement nettoyées et décortiquées, ladite farine étant caractérisée par une taille de particules à 99% inférieure à 212 µm, est mise en oeuvre directement.

### (ii) Solubilisation des protéines

Une farine de féverole de la variété Olan est mélangée à de l'eau osmosée dans un rapport massique 1 : 9. Le pH est ajusté à 7,5 avec une solution de NaOH. Le pH est ajusté de manière à être maintenu à un pH inférieur à 8 pendant toute la durée de la solubilisation des protéines. La solubilisation est réalisée à 25°C pendant 30 minutes. Les phases solide et liquide sont ensuite séparées par décantation et la phase liquide comprenant les protéines solubilisées est récupérée.

### (iii) Purification

Les protéines solubilisées sont ensuite purifiées par précipitation à pH 4,5. Les phases solides et liquides sont séparées par centrifugation et la phase liquide est éliminée.

### (iv) Hydrolyse enzymatique

L'hydrolyse enzymatique est effectuée à 50°C et à pH 7 pendant 3 heures en utilisant un mélange de neutrase et d'alcalase. Les enzymes sont ensuite inactivées par traitement thermique pendant 30 minutes à 90°C.

### (v) Concentration et séchage

L'hydrolysat protéique obtenu à la fin de l'étape d'hydrolyse est centrifugé de façon à récupérer la phase solide. Cette dernière est concentrée par évaporation sous vide, puis séchée par atomisation.

### Résultats

La mise en oeuvre du procédé permet d'obtenir 67 kg d'hydrolysat protéique végétal à partir 900 kg de farine contenant au moins 220 kg de protéines végétales.

Le rendement du procédé est donc de 30%.

Les caractéristiques et propriétés de l'hydrolysat protéique végétal sont détaillées dans l'exemple 2 ci-dessous.

### Exemple 1B :

### Matériel et méthodes

### (i) Matière première

Une farine obtenue à partir de graines de féveroles de la variété Olan soigneusement nettoyées et décortiquées, ladite farine étant caractérisée par une taille de particules à 99% inférieure à 212 µm est directement mise en oeuvre.

### (ii) Solubilisation des protéines

La farine est mélangée à de l'eau osmosée dans un rapport massique 1 : 9. Le pH est ajusté à 7,5 en présence de chaux sous forme de lait de chaux. Le pH est ajusté de manière à être maintenu à un pH inférieur à 8 pendant toute la durée de la solubilisation des protéines. La solubilisation est réalisée à 25°C pendant 30 minutes. Les phases solide et liquide sont ensuite séparées par décantation et la phase liquide comprenant les protéines solubilisées est récupérée.

### (iii) Purification

Les protéines solubilisées sont ensuite purifiées par précipitation à pH 4,5. Les phases solides et liquides sont séparées par centrifugation et la phase liquide est éliminée.

### (iv) Hydrolyse enzymatique

L'hydrolyse enzymatique est effectuée à 50°C et à pH 7 pendant 2 heures en utilisant un mélange de neutrase et d'alcalase.

Les enzymes sont ensuite inactivées par un traitement thermique à 90°C pendant 30 minutes.

### (v) Concentration et séchage

L'hydrolysat protéique obtenu à la fin de l'étape d'hydrolyse est centrifugé de façon à récupérer la phase solide. Cette dernière est concentrée par évaporation sous vide, puis séchée par atomisation.

### Résultats

La mise en oeuvre de ce procédé permet d'obtenir 55,4 kg d'hydrolysat protéique végétal à partir 875 kg de farine contenant au moins 213 kg de protéines végétales.

Le rendement du procédé est donc de 26%.

Les caractéristiques et propriétés de l'hydrolysat protéique végétal sont détaillées dans l'exemple 2 ci-dessous.

### EXEMPLE 2 : Caractéristiques et propriétés d'un hydrolysat protéique végétal de féverole

### (i) Composition d'un hydrolysat protéique végétal de féverole

Le tableau 1 ci-dessous indique les caractéristiques de l'hydrolysat protéique végétal obtenu selon l'exemple 1A et 1B.

**Tableau 1**

| **Valeurs pour 100g** | **unité** | **Hydrolysat selon EXEMPLE 1A** | | **Hydrolysat selon EXEMPLE 1B** | |
|---|---|---|---|---|---|
| Extrait sec | g | 99,500 | | 99,500 | |
| Humidité | g | < 0,5 | | < 0,5 | |
| Cendres | g | 10,540 | | 4,460 | |
| Protéines N x 6,25 | g | 86,400 | | 95,000 | |
| Sodium | g | 3,746 | | 0,083 | |
| Calcium | mg | 36,200 | | 1 530,000 | |

| **Aminogramme :** | | | pour 100 g de protéines | | pour 100 g de protéines |
|---|---|---|---|---|---|
| Thréonine | g | 2,920 | 3,380 | 3,060 | 3,221 |
| Acide aspartique | g | 10,000 | 11,574 | 9,990 | 10,516 |
| sérine | g | 4,550 | 5,266 | 4,890 | 5,147 |
| Lysine | g | 5,930 | 6,863 | 7,440 | 7,832 |
| Valine | g | 3,960 | 4,583 | 4,000 | 4,211 |
| Proline | g | 3,710 | 4,294 | 3,590 | 3,779 |
| Alanine | g | 3,440 | 3,981 | 3,650 | 3,842 |
| Phénylalanine | g | 3,810 | 4,410 | 3,650 | 3,842 |
| Isoleucine total | g | 3,550 | 4,109 | 3,380 | 3,558 |
| Glycine | g | 3,480 | 4,028 | 3,940 | 4,147 |
| Tyrosine | g | 2,850 | 3,299 | 2,580 | 2,716 |
| Arginine | g | 8,040 | 9,306 | 9,380 | 9,874 |
| Leucine | g | 6,510 | 7,535 | 6,190 | 6,516 |
| Histidine | g | 2,320 | 2,685 | 2,930 | 3,084 |
| Acide glutamique | g | 15,900 | 18,403 | 18,900 | 19,895 |
| Tryptophane | g | 0,640 | 0,741 | 0,717 | 0,755 |
| Méthionine | g | 0,595 | 0,689 | 0,678 | 0,714 |
| Cystéine + cystine | g | 0,549 | 0,635 | 0,509 | 0,536 |

| | **unité** | **Hydrolysat selon EXEMPLE 1A** | | **Hydrolysat selon EXEMPLE 1B** | |
|---|---|---|---|---|---|
| **Répartition PM*** : | | | | | |
| PM > 35 000 | % | 0,010 | | 0,020 | |
| 18 000 < PM < 35 000 | % | 0,130 | | 0,320 | |
| 10 000 < PM < 18 000 | % | 0,810 | | 2,100 | |
| 6 000 < PM < 10 000 | % | 2,000 | | 3,250 | |
| 3 000 < PM < 6 000 | % | 5,070 | | 3,910 | |
| 1 000 < PM < 3 000 | % | 27,780 | | 21,050 | |
| 800 < PM < 1 000 | % | 11,370 | | 9,460 | |
| 204 < PM < 800 | % | 47,480 | | 54,820 | |
| PM < 204 | % | 5,350 | | 5,070 | |
| PM moyen | Da | 581 | | 546 | |

| | | | | | |
|---|---|---|---|---|---|
| ** PM en Da* | | | | | |

### (ii) Propriétés hypoallercᵢéniques

### Matériel et Méthodes

Des tests *in vivo* sont réalisés pour évaluer l'innocuité de l'hydrolysat de protéines végétales chez des animaux allergiques aux protéines de lait de vache (PLV).

Des souris sont dans un premier temps sensibilisées à des protéines de lait de vache de manière à les rendre allergiques à celles-ci.

Un test de provocation allergique est alors réalisé. A cet effet, 3 groupes sont constitués :
- le groupe témoin (groupe 1, CTL) sur des animaux non sensibilisés (administration d'une composition ne comprenant ni protéines de lait, ni protéines végétales),
- un groupe protéines de lait (groupe 2, PLV) sur des animaux sensibilisés aux protéines de lait de vache (PLV), puis testés avec des PLV et
- un groupe hydrolysat végétal (groupe 3, HF) sur des animaux sensibilisés aux PLV, puis testés avec l'hydrolysat de protéines végétales.

La réponse immunitaire et allergique est alors évaluée.

### Résultats

Les résultats sont présentés dans les figures 1 et 2.

Les concentrations en protéases mastocytaires de type 1 (mMCP1), marqueurs de la réponse immunitaire, sont significativement différentes entre les trois lots (p<0,0001). Les animaux du lot CTL et du lot HF présentent des concentrations faibles de mMCP1 (4273 ± 511,8 et 8595 ± 1527 pg/mL respectivement) qui ne sont pas différentes entre ces deux lots. A l'inverse, les animaux du lot PLV présentent des concentrations plus élevées (18473 ± 2930 pg/mL) qui sont significativement supérieures à ceux du lot CTL (Figure 1). Les scores anaphylactiques mettent en évidence que les animaux du lot CTL ne présentent pas de réaction allergique (score moyen = 0). A l'inverse, tous les animaux du lot PLV présentent des symptômes allergiques : grattage et frottements autour du nez et de la tête, gonflement autour des yeux, activité réduite avec ou sans augmentation de la fréquence respiratoire (score moyen = 1,8). Les animaux du lot PLV sensibilisés aux protéines de lait de vache ont donc tous eu une réaction allergique lors de l'exposition aux protéines de lait de vache. En revanche, les animaux du lot HF n'ont pas manifesté de symptômes allergiques (score moyen = 0). Les animaux du lot HF, sensibilisés aux protéines de lait de vache, n'ont donc eu aucune réaction allergique lors de l'exposition à l'hydrolysat peptidique de fèverole (Figure 2).

Le groupe témoin ayant reçu une composition sans protéines de lait, ni hydrolysat protéique végétal ne présente pas de réactions allergiques (manifestations allergiques nulles et indicateurs de la réponse immunitaire négatifs).

Le groupe protéines de lait ayant reçu des protéines de lait, présente une réaction allergique (nombreuses manifestations allergiques et indicateurs de la réponse immunitaire positifs).

Le groupe hydrolysat ayant reçu l'hydrolysat végétal ne présente pas de réactions allergiques (manifestations allergiques nulles et indicateurs de la réponse immunitaire négatifs).

Ceci montre que les animaux allergiques aux protéines de lait de vache ont une réaction allergique lorsqu'ils consomment des protéines de lait. A l'inverse, les animaux allergiques aux protéines de lait de vache ne font pas de réaction allergique lorsqu'ils consomment l'hydrolysat protéique végétal.

L'hydrolysat protéique végétal selon l'invention est donc approprié pour les individus allergiques ou susceptibles d'être allergiques (risque allergique) aux protéines de lait de vache.

### EXEMPLE 3 : Compositions alimentaires à base d'un hydrolysat protéique végétal de fève ou féverole

### EXEMPLE 3A : Préparation infantile de suite pour nourrisson de plus de 6 mois

Un exemple de préparation infantile de suite pour nourrisson de plus de 6 mois est indiqué dans le tableau 2 ci-dessous. Les protéines de la préparation infantile sont apportées exclusivement par un hydrolysat protéique de fève et/ou féverole à une concentration de 10% à 20% (en g pour 100 g de préparation), par exemple tel qu'obtenu dans l'exemple 1A ou 1B.

**Tableau 2**

| **Composition nutritionnelle moyenne** | | | **Unités** | **Pour 100 g de poudre** | **Pour 100 ml de lait reconstitué à 13,5%** |
|---|---|---|---|---|---|
| Valeur énergétique | | | kJ | 2 054 | 277 |
| Valeur énergétique | | | kcal | 491 | 66 |
| Humidité | | | g | 2,500 | |
| Cendres | | | g | 3,200 | |
| **Protéines** = N x 6,25 | | | g | 12,000 | 1,620 |
| **Lipides** | | | g | 23,500 | 3,173 |
| | Triglycérides à Chaines Moyennes | | g | 4,000 | 0,540 |
| | | dont AGS totaux | % de MG totale | 45 | |
| | | dont AGMI | % de MG totale | 39 | |
| | | dont AGPI | % de MG totale | 16 | |
| | ac linoléique | | mg | 3 510,000 | 473,850 |
| | ac alpha-linolénique | | mg | 380,000 | 51,300 |
| | DHA | | mg | 126,000 | 17,010 |
| | EPA | | mg | 22,000 | 2,970 |
| **Glucides** | | | g | 56,700 | 7,655 |
| | lactose | | g | - | - |
| | maltodextrines | | g | 36,200 | 4,887 |
| | sirop de glucose | | g | 8,000 | 1,080 |
| | amidon précuit ou prégélatinisé | | g | 12,500 | 1,688 |
| **Fibres alimentaires :** | | | | | |
| | GOS et FOS (90/10) | | g | 2,100 | 0,284 |
| **Minéraux:** | | | | | |
| | sodium | | mg | 170,000 | 22,950 |
| | potassium | | mg | 550,000 | 74,250 |
| | chlorure | | mg | 380,000 | 51,300 |
| | calcium | | mg | 580,000 | 78,300 |
| | phosphore | | mg | 350,000 | 47,250 |
| | magnésium | | mg | 60,000 | 8,100 |
| | fer | | mg | 6,000 | 0,810 |
| | zinc | | mg | 7,000 | 0,945 |
| | cuivre | | µg | 400,000 | 54,000 |
| | iode | | µg | 118,000 | 15,930 |
| | sélénium | | µg | 20,000 | 2,700 |
| | manganèse | | µg | 300,000 | 40,500 |
| | molybdène | | µg | 5,000 | 0,675 |
| | fluorures | | µg | < 491 | < 66 |

| **Vitamines :** | | | | | |
|---|---|---|---|---|---|
| | A | | µg | 525,000 | 70,875 |
| | D3 | | µg | 12,500 | 1,688 |
| | B1 | | µg | 530,000 | 71,550 |
| | B2 | | µg | 1 050,000 | 141,750 |
| | PP - Niacine - B3 | | µg | 5 200,000 | 702,000 |
| | Ac pantothénique - B5 | | µg | 3 950,000 | 533,250 |
| | B6 | | µg | 420,000 | 56,700 |
| | Biotine - B8 - H | | µg | 13,000 | 1,755 |
| | Folates | | µg-DFE | 125,000 | 16,875 |
| | Ac folique | | µg | 75,000 | 10,125 |
| | B12 | | µg | 1,900 | 0,257 |
| | C | | mg | 80,000 | 10,800 |
| | K1 | | µg | 32,000 | 4,320 |
| | E | | mg | 9,000 | 1,215 |

| **Autres nutriments :** | | | | | |
|---|---|---|---|---|---|
| | L-Carnitine | | mg | 10,000 | 1,350 |
| | Taurine | | mg | 20,000 | 2,700 |
| | Choline | | mg | 190,000 | 25,650 |
| | Inositol | | mg | 25,000 | 3,375 |
| | Nucléotides | | mg | 15,000 | 2,025 |

### EXEMPLE 3B : Aliment pour adulte pour la nutrition clinique orale en cas de dénutrition ou de risque de dénutrition

Un exemple d'aliment pour adulte approprié pour la nutrition clinique orale en cas de dénutrition ou de risque de dénutrition est indiqué dans le tableau 3 ci-dessous. Les protéines de cet aliment sont apportées exclusivement par un hydrolysat protéique de fève et/ou féverole à une concentration de 20% à 23% (en g pour 100 g de l'aliment), par exemple tel qu'obtenu dans l'exemple 1A ou 1B.

**Tableau 3**

| **Composition nutritionnelle moyenne** | | | |
|---|---|---|---|
| **Nutriments** | | **Unités** | **Par unité de consommation soit 200g** |
| Valeur énergétique | | kJ | 1 316 |
| Valeur énergétique | | kcal | 313 |
| **Protéines** = N x 6,25 | | g | 19,000 |
| **Lipides** | | g | 11,500 |
| | dont AGS totaux | g | 1,500 |
| | dont AGMI | g | 7,100 |
| | dont AGPI | g | 2,900 |
| **Glucides** | | g | 33,000 |
| | lactose | g | - |
| | sucres | g | 10,000 |
| | maltodextrines | g | 15,000 |
| | sirop de glucose | g | 5,000 |
| | amidon précuit ou prégélatinisé | g | 3,000 |
| **Fibres alimentaires** | | g | 0,800 |

| **Minéraux:** | | | |
|---|---|---|---|
| | sodium | mg | 170,000 |
| | potassium | mg | 390,000 |
| | chlorure | mg | 220,000 |
| | calcium | mg | 380,000 |
| | phosphore | mg | 250,000 |
| | magnésium | mg | 65,000 |
| | fer | mg | 5,000 |
| | zinc | mg | 3,500 |
| | cuivre | µg | 450,000 |
| | iode | µg | 50,000 |
| | sélénium | µg | 20,000 |
| | manganèse | µg | 550,000 |
| | molybdène | µg | 30,000 |
| | fluorures | µg | 250,000 |

| **Vitamines :** | | | |
|---|---|---|---|
| | A | µg | 280,000 |
| | D3 | µg | 3,200 |
| | B1 | µg | 550,000 |
| | B2 | µg | 500,000 |
| | PP - Niacine - B3 | µg | 5 000,000 |
| | Acide pantothénique - B5 | µg | 2 000,000 |
| | B6 | µg | 600,000 |
| | Biotine - B8 - H | µg | 11,000 |
| | Acide folique | µg | 90,000 |
| | B12 | µg | 0,900 |
| | C | mg | 35,000 |
| | K1 | µg | 25,000 |
| | E | mg | 5,000 |

| **Autres nutriments :** | | | |
|---|---|---|---|
| | Choline | mg | 120,000 |

## Revendications

1. Hydrolysat protéique végétal de fève et/ou féverole, **caractérisé en ce qu'**il comprend au moins 85% de protéines, **en ce qu'**il comprend du sodium à une concentration inférieure à 4,5% et **en ce qu'**il est obtenu par un procédé comprenant une étape de solubilisation des protéines de fève et/ou féverole en milieu aqueux à un pH inférieur ou égal à 8,5.

2. Hydrolysat protéique végétal selon la revendication 1, **caractérisé en ce qu'**il est obtenu par hydrolyse enzymatique.

3. Composition alimentaire comprenant un hydrolysat protéique végétal selon la revendication 1 ou 2.

4. Composition alimentaire selon la revendication 3, **caractérisée en ce que** ladite composition alimentaire est sélectionnée dans le groupe consistant en une préparation infantile, barre, encas, préparation en poudre, crème dessert, fromage blanc, boisson frappée à base de lait, boisson frappée aux fruits, yaourt à boire, biscuit, pain, biscotte, pâtes et soupe.

5. Procédé de préparation d'un hydrolysat protéique végétal de fève et/ou féverole, comprenant les étapes suivantes :
a) solubilisation des protéines d'une farine de fève et/ou féverole en milieu aqueux à un pH inférieur ou égal 8,5, pour obtenir des protéines solubilisées,
b) optionnellement, purification desdites protéines solubilisées, pour obtenir des protéines solubilisées purifiées,
c) hydrolyse enzymatique des protéines solubilisées, pour obtenir un hydrolysat protéique végétal,
d) optionnellement, séchage dudit hydrolysat protéique et/ou congélation.

6. Procédé de préparation d'un hydrolysat protéique végétal selon la revendication 5, **caractérisé en ce que** l'étape b) de purification comprend une étape de précipitation à un pH compris de 4 à 5.

7. Procédé de préparation d'une composition alimentaire, **caractérisé en ce que** ledit procédé comprend une étape de mélange d'au moins un hydrolysat protéique végétal selon la revendication 1 ou 2 ou obtenu selon le procédé de la revendication 5 ou 6 avec au moins un autre ingrédient alimentaire.

8. Utilisation d'un hydrolysat protéique végétal de fève et/ou féverole, comme substitut partiel ou total des protéines de lait de vache, riz, soja et/ou de tout autre source protéinée, dans une composition alimentaire.

9. Utilisation d'un hydrolysat protéique végétal selon la revendication 8 pour diminuer le caractère allergène de ladite composition, diminuer la teneur en contaminant(s) de ladite composition et/ou obtenir une composition sans isoflavone.

10. Utilisation d'un hydrolysat protéique végétal de fève et/ou féverole comme source protéique hypoallergénique dans une composition alimentaire.

## Patentansprüche

1. Pflanzliches Proteinhydrolysat von Ackerbohnen und/oder Buschbohnen, **dadurch gekennzeichnet, dass** es mindestens 85 % Proteine umfasst, dass es Natrium in einer Konzentration von weniger als 4,5 % umfasst, und dass es durch ein Verfahren erlangt wird, umfassend einen Schritt der Solubilisierens der Ackerbohnen- und/oder Buschbohnenproteine in wässrigem Medium bei einem pH von 8,5 oder darunter.

2. Pflanzliches Proteinhydrolysat nach Anspruch 1, **dadurch gekennzeichnet, dass** es durch enzymatische Hydrolyse erlangt wird.

3. Lebensmittelzusammensetzung, umfassend ein pflanzliches Proteinhydrolysat nach Anspruch 1 oder 2.

4. Lebensmittelzusammensetzung nach Anspruch 3, **dadurch gekennzeichnet, dass** die Lebensmittelzusammensetzung ausgewählt ist aus der Gruppe, bestehend aus Säuglingsnahrung, Riegel, Snack, Pulverzubereitung, Dessertcreme, Quark, Milchshake, Fruchtshake, Joghurtdrink, Keks, Brot, Zwieback, Nudeln und Suppe.

5. Herstellungsverfahren eines pflanzlichen Proteinhydrolysats aus Ackerbohnen und/oder Buschbohnen, umfassend die folgenden Schritte:
a) Solubilisieren der Proteine eines Bohnen- und/oder Ackerbohnenmehls in wässrigem Medium bei einem pH von 8,5 oder weniger, um solubilisierte Proteine zu erlangen,
b) optional Aufreinigen der solubilisierten Proteine, um auf gereinigte solubilisierte Proteine zu erlangen,
c) enzymatische Hydrolyse der solubilisierten Proteine, um ein pflanzliches Proteinhydrolysat zu erlangen,
d) optional Trocknen des Proteinhydrolysats und/oder Einfrieren.

6. Herstellungsverfahren eines pflanzlichen Proteinhydrolysats nach Anspruch 5, **dadurch gekennzeichnet, dass** der Aufreinigungsschritt b) einen Präzipitationsschritt bei einem pH von 4 bis 5 umfasst.

7. Herstellungsverfahren einer Lebensmittelzusammensetzung, **dadurch gekennzeichnet, dass** das Verfahren einen Schritt eines Mischens von mindestens einem pflanzlichen Proteinhydrolysat nach Anspruch 1 oder 2 umfasst oder gemäß dem Verfahren von Anspruch 5 oder 6 mit mindestens einem anderen Lebensmittelbestandteil umfasst.

8. Verwendung eines pflanzlichen Proteinhydrolysats aus Ackerbohnen und/oder Buschbohnen als teilweiser oder vollständiger Ersatz für Kuhmilch-, Reis-, Sojaproteine und/oder eine beliebige andere Proteinquelle in einer Lebensmittelzusammensetzung.

9. Verwendung eines pflanzlichen Proteinhydrolysats nach Anspruch 8, um den allergenen Charakter der Zusammensetzung zu verringern, den Gehalt an Kontaminant(en) in der Zusammensetzung zu verringern und/oder eine isoflavonfreie Zusammensetzung zu erlangen.

10. Verwendung eines pflanzlichen Proteinhydrolysats aus Ackerbohnen und/oder Buschbohnen als hypoallergene Proteinquelle in einer Lebensmittelzusammensetzung.

## Claims

1. Vegetable protein hydrolyzate of broad bean and/or fava bean, **characterized in that** it comprises at least 85% protein, **in that** it comprises sodium at a concentration of less than 4.5% and **in that** it is obtained by a process comprising a step of solubilization of the proteins of broad bean and/or fava bean in an aqueous medium at a pH less than or equal to 8.5.

2. Vegetable protein hydrolyzate according to claim 1, **characterized in that** it is obtained by enzymatic hydrolysis.

3. Food composition comprising a vegetable protein hydrolyzate according to claim 1 or 2.

4. Food composition according to claim 3, **characterized in that** said food composition is selected from the group consisting of an infant preparation, bar, snack, powder preparation, dessert cream, cottage cheese, milk-based shake, smoothie, drinking yogurt, cookie, bread, rusk, pasta and soup.

5. Process for preparing a vegetable protein hydrolyzate of broad bean and/or fava bean, comprising the following steps:
a) solubilization of the proteins of a broad bean and/or fava bean flour in an aqueous medium at a pH less than or equal to 8.5, in order to obtain solubilized proteins,
b) optionally, purification of said solubilized proteins, to obtain purified solubilized proteins,
c) enzymatic hydrolysis of the solubilized proteins, to obtain a vegetable protein hydrolyzate,
d) optionally, drying of said protein hydrolyzate and/or freezing.

6. Process for preparing a vegetable protein hydrolyzate according to claim 5, **characterized in that** step b) of the purification comprises a step of precipitation at a pH comprised from 4 to 5.

7. Process for preparing a food composition, **characterized in that** said process comprises a step of mixing at least one vegetable protein hydrolyzate according to claim 1 or 2 or obtained according to the process of claim 5 or 6 with at least one other food ingredient.

8. Use of a vegetable protein hydrolyzate of broad bean and/or fava bean, as a partial or total substitute for proteins from cow's milk, rice, soy and/or any other protein source, in a food composition.

9. Use of a vegetable protein hydrolyzate according to claim 8 to reduce the allergenic nature of said composition, reduce the contaminant(s) content of said composition and/or obtain a composition without isoflavone.

10. Use of a vegetable protein hydrolyzate of broad bean and/or fava bean as a hypoallergenic protein source in a food composition.
